# NEUE EUROPÄISCHE PATENTSCHRIFT

(11) **EP 2 016 134 B2**
(45) Veröffentlichungstag und Bekanntmachung des Hinweises auf die Entscheidung über den Einspruch: **24.06.2015**
(45) Hinweis auf die Patenterteilung: 14.07.2010
(21) Anmeldenummer: 07728887.6
(22) Anmeldetag: 08.05.2007
(51) Int. Cl.: C08L 83/04, C08K 3/36, C08L 83/06

(54) **ALKOXYSILANTERMINIERTE POLYMERE ENTHALTENDE TRANSPARENTE POLYMERABMISCHUNGEN**
TRANSPARENT POLYMER MIXTURES WHICH CONTAIN ALKOXYSILANE-TERMINATED POLYMERS
MÉLANGES POLYMÈRES TRANSPARENTS CONTENANT DES POLYMÈRES À TERMINAISON ALCOXYSILANE

(30) Priorität: 11.05.2006 DE 102006022095
(43) Veröffentlichungstag der Anmeldung: 21.01.2009
(73) Patentinhaber: Wacker Chemie AG, 81737 München (DE)
(72) Erfinder: SCHINDLER, Wolfram, 84577 Tüssling (DE); SCHWIEBACHER, Elke, 84359 Simbach (DE)
(74) Vertreter: Fritz, Helmut
(86) Internationale Anmeldenummer: PCT/EP2007/054434
(87) Internationale Veröffentlichungsnummer: WO 2007/131912

(56) Entgegenhaltungen:
- EP-A1- 1 535 940
- WO-A1-2003/018658
- WO-A1-2003/068886
- WO-A1-2004/022618
- WO-A1-2007/054300
- DE-A1- 4 029 505
- DE-A1- 10 351 804
- US-A1- 2003 153 671
- WOLFRAM SCHNEIDER: "GENIOSIL® Alpha Silane - Terminated Polymers As Novel Binders For Fast Curing Elastic Adhesives" THE EUROPEAN COATINGS SHOW 2005, [Online] 2005, Seiten 1-13, XP002446177 www.wacker.de Gefunden im Internet: URL:http://www.wacker.com/internet/webcach e/de_DE/_Downloads/GENIOSIL_Reprint_AS_Adh esives_BRO_EN.pdf> [gefunden am 2007-08-09]
- WACKER SILICONES, GENIOSIL, EINEN SCHRITT VORAUS, ORGANOFUNKTIONELLE SILANE VON WACKER September 2003,
- 'RöMPP CHEMIE LEXIKON, CD VERSION', Bd. 9, 1995 vol. 'Stichwort "Aerosil"'
- MORRISON/BOYD: 'Lehrbuch der organischen Chemie', Bd. 2, 1978, ISBN 3-527-25761-6 Seite 791
- LOUIS AND MARY FIESER: 'Organische Chemie', Bd. 2, 1968, ISBN 3-527-25075-1 Seite 620

## Beschreibung

Die Erfindung betrifft transparente Polymerabmischungen, die alkoxysilanterminierte Polymere und Kieselsäuren mit großer BET Oberfläche enthalten und ein Katalysatorsystem, das frei von Aminfunktionen ist.

Polymersysteme, die über reaktive Alkoxysilylgruppen verfügen, sind seit langem bekannt. In Gegenwart von Luftfeuchtigkeit sind diese alkoxysilantermierten Polymere bereits bei Raumtemperatur in der Lage, unter Abspaltung der Alkoxygruppen miteinander zu kondensieren. Je nach Gehalt an Alkoxysilangruppen und deren Aufbau bilden sich dabei hauptsächlich langkettige Polymere (Thermoplaste), relativ weitmaschige dreidimensionale Netzwerke (Elastomere) oder aber hochvernetzte Systeme (Duroplaste).

Dabei kann es sich sowohl um alkoxysilanterminierte Polymere mit organischem Rückgrat handeln, z.B. um Polyurethane, Polyester, Polyether etc., beschrieben u.a. in EP-A-269 819, EP-A-931 800, WO 00/37533, US 3,971,751 und DE 198 49 817, als auch um Polymere, deren Rückgrat ganz oder zumindest zum Teil aus Organosiloxanen besteht, beschrieben u.a. in WO 96/34030 und US 5,254,657.

Entsprechend der zahllosen Möglichkeiten zur Gestaltung von derartigen silanterminierten Polymersystemen lassen sich sowohl die Eigenschaften der unvernetzten Polymere bzw. der polymerhaltigen Mischungen (Viskosität, Schmelzpunkt, Löslichkeiten etc.) als auch die Eigenschaften der fertig vernetzten Massen (Härte, Elastizität, Zugfestigkeit, Reißdehnung, Hitzebeständigkeit etc.) nahezu beliebig einstellen. Entsprechend vielfältig sind daher auch die Einsatzmöglichkeiten von derartigen silanterminierten Polymersystemen. So lassen sie sich beispielsweise zur Herstellung von Elastomeren, Dichtstoffen, Klebstoffen, elastischen Klebesystemen, harten und weichen Schäumen, den unterschiedlichsten Beschichtungssystemen oder für Abformmassen verwenden. Diese Produkte lassen sich in jeder Form applizieren, wie z.B. streichen, sprühen, gießen, pressen, spachteln etc. je nach Zusammensetzung der Formulierungen.

Eine besonders interessante Anwendung im Kleb- und Dichtstoffbereich sind Formulierungen, die nach Härtung transparent bleiben. Anwendungen für diese Kleb- und Dichtstoffe sind dort angezeigt, wo die Klebenaht nicht sichtbar sein soll oder die Farbgebung der zu verklebenen Bauteile keine geeignete Auswahl an gefärbten, gefüllten Klebern zuläßt. Ein weiterer Vorteil der transparenten Massen ist, dass sie universeller eingesetzt werden können. Bei eingefärbt Massen muss immer eine breite Farbpalette angeboten werden, um unterschiedlichste Anwendungen abzudecken. Ein besonders hoher optischer Anspruch an die Verklebung wird z.B. im Bereich von Vitrinen gestellt.

Transparente Massen sollten so auch bleiben. Bisher zeigt eine Vielzahl der Produkte unter Lagerung und Lichteinwirkung ein deutliches Nachgilben vor allem unter UV. Ursache dafür sind meist Aminverbindungen in den Formulierungen. Bei den üblichen Formulierungen von silylierten Polymeren werden Amine zugesetzt, meist ins Form von Aminosilanen. Diese dienen als Haftvermittler und auch als Cokatalysator für die Härtung. Beispiele für solche Massen werden in EP 1041119 A beschrieben.

In kreidegefüllten Massen kann die Gelbfärbung vielfach durch die Rezeptur ausglichen werden oder fällt schlichtweg nicht auf. In transparenten Massen ist eine Gelbfärbung kaum zu überdecken. Eine Zugabe von Farbstoffen - meist bläulich, zur Überlagerung der Gelbfärbung wird vielfach angewendet. Allerdings ist dies nur bedingt wirksam, da bei stärkerer Gelbfärbung ein "Grünstich" entsteht, der sogar bis ins braune gehen kann.

Gegenstand der Erfindung sind Polymerabmischungen (P), die
A) alkoxysilanterminierte Polymere (A) mit mindestens einer Endgruppe der allgemeinen Formel (1)

   -A-(CH₂)ₘ-SiR¹ₐ(OR²)₃₋ₐ (1)

   wobei
   **A** eine zweibindige Bindegruppe ausgewählt aus -O-, -S-, -O-CO-N(R³)-, -N(R³)-CO-O-, -N(R³)-CO-NH-, -NH-CO-N(R³)-, -N(R³)-CO-N(R³)-,
   **R¹** einen gegebenenfalls halogensubstuierten Alkyl-, Cycloalkyl-, Alkenyl- oder Arylrest mit 1-10 Kohlenstoffatomen,
   **R²** einen Alkylrest mit 1-6 Kohlenstoffatomen oder einen ω- Oxaalkyl-alkylrest mit insgesamt 2-10 Kohlenstoffatomen,
   **R³** Wasserstoff, einen gegebenenfalls halogensubstuierten cyclischen, linearen oder verzweigten C₁ bis C₁₈-Alkyl- oder Alkenylrest oder einen C₆- bis C₁₈-Arylrest,
   **a** eine ganze Zahl von 0 bis 2 und
   **m** die Zahl 1 bedeuten,
   bei denen die Hauptketten aufgebaut sind aus Polymeren, die ausgewählt werden aus Polysiloxan-Urea/Urethan-Copolymeren, Polyurethanen, Polyharnstoffen, Polyethern, Polyestern, Polyacrylaten und -methacrylaten, Polycarbonaten, Polystyrolen, Polyamiden, Polyvinylestem oder Polyolefinen Polybutadien, Ethylen-Olefincopolymeren oder Styrol-Butadiencopolymeren und Mischungen und Kombinationen aus Polymeren mit verschiedenen Hauptketten,
B) pyrogen hergestellte oder gefällte Kieselsäure mit einer BET Oberfläche von mindestens 50 m²/g und
C) einen Katalysator mit höchstens 0,05 Gew.-% Aminoverbindungen enthalten und keine weiteren Füllstoffe enthalten.

Die Polymerabmischungen (P)sind transparent. Es wurde gefunden, dass in den transparenten Polymerabmischungen (P), ein sehr breiter Bereich von Kieselsäuren einsetzbar ist und man trotzdem sehr hochtransparente Systeme bekommt. Im Gegensatz dazu müssen bei anderen Polymeren speziellere und speziell gecoatede Kieselsäuren mit meist höherer BET Oberfläche von mindestens 300 m²/g eingesetzt werden. Überdies zeigen die Polymerabmischungen (P) keine Gelbfärbung unter Lagerung und Lichteinwirkung. Da die alkoxysilanterminierten Polymere (A) sehr hohe Reaktivitäten haben kann auf die Verwendung von Aminen oder Aminosilanen als Cokatalysatoren verzichtet werden.

Die Polymerabmischungen (P) können ein- oder zweikomponentig formuliert werden. In zweikomponentigen Polymerabmischungen (P) wird das Polymer (A) mit der Kieselsäure (B) als Basiskomponente abgemischt und der Katalysator (C) in der Härterkomponente bevorzugt formuliert'. Besonders bevorzugt sind einkomponentig härtende Polymerabmischungen.

Die Polymerabmischungen (P) enthalten vorzugsweise einen Katalysator mit höchstens 0,01 Gew.-% Aminoverbindungen und insbesondere keine Aminoverbindungen. Als Aminoverbindungen werden hierbei primäre, sekundäre oder auch tertiäre Amine umfasst, die entweder einen katalytischen Effekt auf die Härtung der Polymere (A) haben können oder als Cokatalysator zugesetzt werden. Dies sind üblicherweise stark basische Verbindungen wie Triethylamin, Tributylamin, Cyclohexylamin, 1,4-Diazabicyclo[2,2,2]octan, 1,8-DiazabicyGo[5,4,0]undec-7-en oder auch Aminosilane wie Aminopropyl-trimethoxysilan, Aminopropyl-triethoxysilan, N-Aminoethyl-aminopropyl-trimethoxysilan.

Die Hauptketten der einsetzbaren alkoxysilanterminierten Polymere (A) können verzweigt oder unverzweigt sein. Die mittleren Kettenlängen können beliebig entsprechend der jeweils gewünschten Eigenschaften sowohl der unvernetzten Mischung als auch der ausgehärteten Masse angepaßt werden. Sie können aus unterschiedlichen Bausteinen aufgebaut sein. Selbstverständlich können auch beliebige Mischungen oder Kombinationen aus Polymeren mit verschiedenen Hauptketten eingesetzt werden.

Zur Herstellung von Polymeren (A) mit Silanterminierungen der allgemeinen Formel (1) sind eine Vielzahl von Möglichkeiten bekannt, insbesondere:
- Copolymerisationen unter Beteiligung von ungesättigten Monomeren, die über Gruppen der allgemeinen Formel (1) verfügen. Beispiele für derartige Monomere wären Vinyltrimethoxysilan, Vinyl-methyldimethoxysilan, (Meth-) Acryloyloxypropyl-trimethoxysilan, (Meth-)Acryloyloxymethyl-trimethoxysilan, (Meth-)Acryloyloxymethyl-methyldimethoxysilan oder auch die entsprechenden Ethoxysilylverbindungen.
- Aufpfropfung von ungesättigten Monomeren, die über Gruppen der allgemeinen Formel (1) verfügen auf Thermoplaste wie Polyethylen. Beispiele für derartige Monomere wären Vinyltrimethoxysilan, Vinyl-methyldimethoxysilan, (Meth-) Acryloyloxypropyl-trimethoxysilan, (Meth-)Acryloyloxymethyl-trimethoxysilan, (Meth-)Acryloyloxymethyl-methyldimethoxysilan oder auch die entsprechenden Ethoxysilylverbindungen.
- Hydrosilylierung von H-Silanen wie Dimethoxymethylsilan, Diethoxymethylsilan, Trimethoxymethylsilan oder Triethoxysilan an ungestättigten, endständigen oder kettenständigen Doppelbindungen meist unter Platinkatalyse.
- Umsetzung eines Präpolymeren (A1) mit einem oder mehreren Organosilanen (A2) der allgemeinen Formel (2)

   C-B-(CH₂)ₘ-SiR¹ₐ(OR²)₃₋ₐ (2)

   in der **R¹, R², R³, m** und **a** die oben genannten Bedeutungen aufweisen,
   **B**
   ein Sauerstoff-, Stickstoff- oder Schwefelatom bedeutet und
   **C-B-**
   eine funktionelle Gruppe darstellt, die reaktionsfähig ist gegenüber geeigneten funktionellen Gruppen des Präpolymeren (A1).

Ist dabei das Präpolymer (A1) selbst aus mehreren Bausteinen (A11, A12 ...) zusammengesetzt, so ist es nicht unbedingt erforderlich, daß aus diesen Bausteinen (All, A12 ...) zunächst das Präpolymer (A1) hergestellt wird, welches anschließend mit dem Silan (A2) zum fertigen Polymer (A) umgesetzt wird. So ist hier auch eine Umkehrung der Reaktionsschritte möglich, bei dem einer oder mehrere Bausteine (A11, A12 ...) zunächst mit dem Silan (A2) umgesetzt werden, und die dabei erhaltenen Verbindungen erst anschließend mit den verbleibenden Bausteinen (A11, A12 ...) zum fertigen Polymer (A) umgesetzt werden. Beispiele für Präpolymere (A1) bestehend aus Bausteinen A11, A12 sind OH-, NH- oder NCO-terminierte Polyurethane und Polyharnstoffe, welche sich aus Polyisocyanaten (Baustein A11) sowie Polyolen (Baustein A12) herstellen lassen.

Bevorzugte Polymere (A) mit Silanterminierungen der allgemeinen Formel (1) sind silanterminierte Polyether und Polyurethane, besonders bevorzugt Polyether, die aus Organosilan (A2) der allgemeinen Formel (4) und dem Präpolymeren (A1) hergestellt werden.

Bei einer bevorzugten Herstellungsweise der Polymere (A) wird ein Silan (A2) eingesetzt, das ausgewählt wird aus Silanen der allgemeinen Formel (3)

OCN-(CH₂)ₘ-SiR¹ₐ(OR²)₃₋ₐ (3),

wobei
**R¹, R², R³, m** und **a** die oben angegebenen Bedeutungen besitzen.

Bei der Herstellung des Polymeren (A) sind die Konzentrationen aller an sämtlichen Reaktionsschritten beteiligter Isocyanatgruppen und aller isocyanatreaktiver Gruppen sowie die Reaktionsbedingungen bevorzugt so gewählt, daß im Laufe der Polymersynthese sämtliche Isocyanatgruppen abreagieren. Das fertige Polymer (A) ist somit bevorzugt isocyanatfrei.

Als Polyole für die Herstellung der Polymere (A) eignen sich besonders aromatische und aliphatische Polyesterpolyole und Polyetherpolyole, wie sie in der Literatur vielfach beschrieben sind. Prinzipiell können aber sämtliche polymeren, oligomeren oder auch monomeren Alkohole mit ein oder mehr OH-Funktionen eingesetzt werden.

Vorzugsweise bedeutet **R¹** einen Phenylrest oder Alkyl- oder Alkenylrest mit 1-6 Kohlenstoffatomen, insbesondere Methyl-, Ethyl- oder Vinylrest.
Vorzugsweise bedeutet **R²** einen Alkylrest mit 1-3 Kohlenstoffatomen, insbesondere Methyl- oder Ethylrest. Vorzugsweise bedeutet **R³** Wasserstoff, einen Phenylrest oder Alkyl- oder Alkenylrest mit 1-6 Kohlenstoffatomen, insbesondere Methyl-, Ethyl- oder n-Propylrest.

Die Kieselsäuren (B) mit einer BET-Oberfläche von mindestens 50 m²/g werden als verstärkende Füllstoffe bezeichnet. Die Kieselsäuren (B) können hydrophil oder hydrophobiert sein, beispielsweise durch Behandlung mit Organosilanen, -silazanen oder -siloxanen oder durch Veretherung von Hydroxylgruppen zu Alkoxygruppen.
Besonders bevorzugt sind hydrophobierte Kieselsäuren (B).
Die BET Oberfläche der Kieselsäuren (B) beträgt bevorzugt mindestens 100 m²/g, bevorzugt höchstens 500 m²/g, insbesondere höchstens 250 m²/g.

Als Katalysatoren (C) werden bevorzugt Kondensationskatalysatoren eingesetzt. Bevorzugte Katalysatoren (C) sind Zinnverbindungen, wie Dibutylzinndilaurat, Dibutylzinnmaleat, Dibutylzinndiacetat, Dibutylzinndioctanoat, Dibutylzinnacetylacetonat, Dibutytzinnoxid, oder entsprechende Verbindungen des Dioctylzinn; aber auch andere Lewis-sauren Verbindungen der Übergangsmetalle wie Titan, Zirkon, Hafnium, Zink, Bor, Aluminium, Bismut etc.
Ferner Carbonsäuren, Phosphorsäuren bzw. -teilester, Phosphorigesäure bzw. -teilester, Toluolsulfonsäuren oder Mineralsäuren.
Die verschiedenen Katalysatoren können sowohl in reiner Form als auch als Mischungen verwendet werden.
Bevorzugt sind die Katalysatoren frei von Resten, die selbst oder durch Abbau chromophore Gruppen bilden können.

In den Polymerabmischungen (P) beträgt der Anteil an alkoxysilanterminierten Polymeren (A) vorzugsweise 10-90 Gew.-%, besonders bevorzugt 20-70 Gew.-%, insbesondere 30-50 Gew.-%. Der Anteil an Kieselsäuren (B) beträgt vorzugsweise 0,1-25 Gew.-%, besonders bevorzugt 2-20 Gew.-%, insbesondere 5-15 Gew.-%. Der Anteil an Katalysator (C) beträgt vorzugsweise 0,01-10 Gew.-%, besonders bevorzugt 0,1-5 Gew.-%, insbesondere 0,1-2 Gew.-%.

Die Polymerabmischungen (P) können Wasserfänger und Silanvernetzer enthalten, beispielsweise Vinylsilane wie Vinyltrimethoxy-, Vinyltriethoxy-, Vinylmethyldimethoxy-, O-Methylcarbamatomethyl-methyldimethoxysilan, O-Methylcarbamatomethyl-trimethoxysilan, O-Ethylcarbamatomethylmethyldiethoxysilan, O-Ethylcarbamatomethyl-triethoxysilan, allgemein Alkylalkoxysilane oder aber auch weitere organofunktionelle Silane.
Die Wasserfänger und Silanvernetzer werden bevorzugt in Konzentrationen von 0,1 - 10 Gew.-%, besonders bevorzugt 0,5-2 Gew.-% der Polymerabmischungen (P) eingesetzt.

Die Polymerabmischungen (P) können Weichmacher enthalten, beispielsweise Phthalatester, wie Dioctylphthalat, Diisooctylphthalat, Diundecylphthalat, Adipinsäureester, wie Dioctyladipat, Benzoesäureester, Glycolester, Phosphorsäureester, Polyester, Polyether, Polystyrole, Polybutadiene, Polyisobutene, paraffinische Kohlenwasserstoffe, hohere, verzweigte Kohlenwasserstoffe etc.
Die Weichmacher werden bevorzugt in Konzentrationen von bis zu 50 Gew.-%, der Polymerabmischungen (P) eingesetzt.

Die Polymerabmischungen (P) können weiterhin Lichtschutzmittel, wie sogenannte HALS-Stabilisatoren, Fungizide, Flammschutzmittel, Pigmente etc. enthalten, wie sie für den Einsatz in herkömmlichen alkoxyvernetzenden einkomponentigen Massen bekannt sind.

Zur Erzeugung der jeweils gewünschten Eigenschaftsprofile sowohl der unvernetzten Polymerabmischungen (P) als auch der ausgehärteten Massen werden vorstehende Zusätze bevorzugt eingesetzt.

Für die Polymerabmischungen (P) existieren zahllose verschiedene Anwendungen im Bereich der Kleb-, Dicht- und Fugendichtstoffe, Oberflächenbeschichtungen sowie auch bei der Herstellung von Abformmassen und Formteilen.

Dabei sind die Polymerabmischungen (P) für zahllose unterschiedliche Untergründe wie z.B. mineralische Untergründe, Metalle, Kunststoffe, Glas, Keramik etc. geeignet.

Alle vorstehenden Symbole der vorstehenden Formeln weisen ihre Bedeutungen jeweils unabhängig voneinander auf. In allen Formeln ist das Siliciumatom vierwertig.

In den folgenden Beispielen sind soweit nicht anders angegeben, alle Mengen- und Prozentangaben auf das Gewicht bezogen.

### Beispiele

### Beispiele 1a

### Herstellung von einkomponentigen Formulierungen

Jeweils 425 g der silanterminierten Polyether, erhältlich unter der Bezeichung GENIOSIL® STP-E10 und GENIOSIL® -STP-E15 bei der Wacker Chemie AG werden bei 25°C in einem Laborplanetenmischer der Fa. PC-Laborsystem, ausgestatte mit zwei Balkenmischern, mit 10,0 g GENIOSIL® XL10 (Wacker Chemie AG) gemischt und 90 g einer hyrophobierten Kieselsäure HDK® H18 (Wacker Chemie AG) eingerührt bis sie homogen verteilt ist. Anschießend werden 20 g Glycidoxypropyl-trimethoxysilan (GENIOSIL® GF80 - Wacker Chemie AG) und 10 g TINUVIN® 292 (Ciba AG) 1 Minute bei 200 U/min eingearbeitet. Abschließend werden 20 g Dibutylzinndilaurat (Fa. Merck) während 1 Minute bei 200 U/min verteilt, 2 Minuten bei 600 U/min und 1 Minute bei 200 U/min im Teilvakuum (ca. 100 mbar) homogenisiert und blasenfrei gerührt.
Die Formulierung wird in 310 ml PE-Kartuschen abgefüllt und einen Tag bei 25°C gelagert.

### Vergleichsbeispiel 1b (nicht erfindungsgemäß)

Herstellung erfolgt analog Beispiel 1a, wobei im letzten Schritt zusätzlich zum Dibutylzinndilaurat noch 10 g Aminopropyl-trimethoxysilan (GENIOSIL® GF96 - Wacker Chemie AG) eingearbeitet werden.

### Bestimmung der mechanischen Eigenschaften

Die Proben werden auf ausgefrästen Teflon®-Platten mit 2 mm Tiefe ausgestrichen und 2 Wochen bei 23°C, 50 relativer Luftfeuchte gehärtet.
Die mechanischen Eigenschaften werden nach DIN 53504 (Zugprüfung) und DIN 53505 (Härte Shore A) bestimmt.

### UV-Lagerung

Die Bestimmung der Gelbfärbung unter UV-Lagerung erfolgt in einer nicht gekühlten Belichtungskammer mit UV-Lampen der Fa. Osram - Ultra-Vitalux® 300 W. Die Temperatur in der Kammer liegt dabei zwischen 50 - 60°C
Die Werte sind in Tabelle 1 aufgeführt:

**Tabelle 1**

| **Beispiel** | **Beispiel 1a** | **Vergleichsbeispiel 1b*** |
|---|---|---|
| **GENIOSIL STP-E10** | 42,5% | 42,0% |
| **GENIOSIL STP-E15** | 42,5% | 42,0% |
| **GENIOSIL XL 10** | 1,0% | 1,0% |
| **HDK H 18** | 9,0% | 9,0% |
| **GENIOSIL GF 80** | 2,0% | 2,0% |
| **TINUVIN 292** | 1,0% | 1,0% |
| **DBTL** | 2,0% | 2,0% |
| **GENIOSIL GF 96** | | 1,0% |
| | | |
| **Aussehen** | transparent | transparent, schwach gelb |
| **Hautbildungszeit.** | 70 min | 11 min |
| | | |
| **Folie nach 1 Woche UV** | transparent | gelb gefärbt |
| | | |
| **Vulkanisat nach DIN 53504 und DIN 53505** | | |
| **Modul S1 in N/mm²** | 1,31 | 1,31 |
| **Shore A** | 46 | 46 |
| **Reißdehnung S1 in %** | 159 | 175 |
| **Reibfestigkeit S1 in N/mm²** | 1,8 | 2 |

| | | |
|---|---|---|
| *nicht erfindungsgemäß | | |

### Beispiel 2

### Herstellung von zweikomponentigen Formulierungen

Die Herstellung von Formulierungen erfolgt analog zu den in Beispiel 1 beschriebenen Verfahren. Lediglich werden hier die Basiskomponente und die Härterkomponente unabhängig voneinander hergestellt. Die Mischung der Komponenten zur Herstellung der Prüfkörper erfolgte in SpeedMixer® der Fa. Hauschild - 50 g Mischung wurden dazu 1 min bei 3000 Umdrehungen gemischt und sofort verarbeitet.
Die Werte sind in Tabelle 2 aufgeführt:

**Tabelle 2**

| **Beispiel** | **2** |
|---|---|
| **Basiskomponente** | |
| **GENIOSIL STP-E10** | 24,8% |
| **GENIOSIL STP-E15** | 24,7% |
| **GENIOSIL XL 10** | 1,0% |
| **HDK H 18** | 7,5% |
| **GENIOSIL GF 80** | 1,0% |
| **GENIOSIL GF 91** | |
| **GENIOSIL GF 96** | |
| | |
| **Härterkomponente** | |
| **Polyether-** | |
| **weichmacher** | 29,9% |
| **dest. Wasser** | 0,5% |
| **Tinuvin 292** | 1,0% |
| **DBTL** | 2,0% |
| **Butylphosphat** | 0,1% |
| **HDK H 18** | 7,5% |
| | |
| | transparent |
| **Topfzeit** | 76 min |
| | |
| **Folie nach 1 Woche UV** | transparent |
| | |
| **Vulkanisat nach DIN 53504 und DIN 53505** | |
| **Modul S1 in N/mm²** | 1,19 |
| **Shore A** | 42 |
| **Reißdehnung S1 in %** | 238 |
| **Reißfestigkeit S1 in N/mm²** | 2,6 |

### Bestimmung der mechanischen Eigenschaften

Die Proben werden auf ausgefrästen Teflonplatten mit 2 mm Tiefe ausgestrichen und 2 Wochen bei 23°C, 50 rel. Luftfeuchte gehärtet.
Die mechanischen Eigenschaften werden nach DIN 53504 (Zugprüfung) und DIN 53505 (Härte Shore A) bestimmt.

### UV-Lagerung

Die Bestimmung der Gelbfärbung unter UV-Lagerung erfolgt in einer nicht gekühlten Belichtungskammer mit UV-Lampen der Fa. Osram - Ultra-Vitalux® 300 W. Die Temperatur in der Kammer liegt dabei zwischen 50 - 60°C

## Patentansprüche

1. Polymerabmischungen (P), die
A) alkoxysilanterminierte Polymere (A) mit mindestens einer Endgruppe der allgemeinen Formel (1)
-A-(CH₂)ₘ-SiR¹ₐ(OR²)₃₋ₐ (1)
wobei
**A** eine zweibindige Bindegruppe ausgewählt aus -O-, -S-, -O-CO-N(R³)-, -N(R³)-CO-O-, -N(R³)-CO-NH-, -NH-CO-N(R³)-, -N(R³)-CO-N(R³)-,
**R¹** einen gegebenenfalls halogensubstuierten Alkyl-, Cycloalkyl-, Alkenyl- oder Arylrest mit 1-10 Kohlenstoffatomen,
**R²** einen Alkylrest mit 1-6 Kohlenstoffatomen oder einen ω-Oxaalkyl-alkylrest mit insgesamt 2-10 Kohlenstoffatomen,
**R³** Wasserstoff, einen gegebenenfalls halogensubstuierten cyclischen, linearen oder verzweigten C₁ bis C₁₈-Alkyl- oder Alkenylrest oder einen C₆- bis C₁₈-Arylrest,
**a** eine ganze Zahl von 0 bis 2 und
**m** die Zahl von 1 bedeuten,
bei denen die Hauptketten aufgebaut sind aus Polymeren, die ausgewählt werden aus Polysiloxan-Urea/Urethan-Copolymeren, Polyurethanen, Polyharnstoffen, Polyethern, Polyestern, Polyacrylaten und -methacrylaten, Polycarbonaten, Polystyrolen, Polyamiden, Polyvinylestern oder Polyolefinen Polybutadien, Ethylen-Olefincopolymeren oder Styrol-Butadiencopolymeren und Mischungen und Kombinationen aus Polymeren mit verschiedenen Hauptketten,
B) pyrogen hergestellte oder gefällte Kieselsäure mit einer BET Oberfläche von mindestens 50 m²/g und
C) einen Katalysator mit höchstens 0,05 Gew.-% Aminoverbindungen enthalten und keine weiteren Füllstoffe enthalten.

2. Polymerabmischungen (P) nach Anspruch 1, bei denen die Polymere (A) erhältlich sind durch Umsetzung von Silanen der allgemeinen Formel (3)
OCN-(CH₂)ₘ-SiR¹ₐ(OR²)₃₋ₐ (3),
wobei **R¹, R², R³** und **m** und **a** die in Anspruch 1 angegebenen Bedeutungen besitzen,
mit Polyesterpolyolen oder Polyetherpolyolen.

3. Polymerabmischungen (P) nach Anspruch 1 und 2, bei denen **R²** einen Alkylrest mit 1-3 Kohlenstoffatomen bedeutet.

4. Polymerabmischungen (P) nach Anspruch 1 bis 3, bei denen die Kieselsäuren (B) hydrophobiert sind durch Behandlung mit Organosilanen, -silazanen oder -siloxanen oder durch Veretherung von Hydroxylgruppen zu Alkoxygruppen.

5. Polymerabmischungen (P) nach Anspruch 1 bis 4, bei denen die Katalysatoren (C) ausgewählt werden aus Zinnverbindungen, Lewis-sauren Verbindungen der Übergangsmetalle Titanat, Zirkon, Hafnium, Zink, Bor, Aluminium und Bismut, Carbonsäuren, Phosphorsäuren, Phosphorsäurenteilestern, Phosphorigesäuren, Phosphorigesäurenteilestern, Toluolsulfonsäuren und Mineralsäuren.

## Claims

1. Polymer blends (P) which comprise
A) alkoxysilane-terminated polymers (A) having at least one end group of the general formula (1)
-A- (CH₂)ₘ-SiR¹ₐ(OR²)₃₋ₐ (1)
where
**A** is a divalent linker group selected from -O-, -S-, -O-CO-N(R³)-, -N(R3) -CO-O-, -N(R³)-CO-NH-, -NH-CON(R³)-, -N(R³)-CO-N(R³)-,
**R¹** is an optionally halogen-substituted alkyl, cycloalkyl, alkenyl or aryl radical having 1-10 carbon atoms,
**R²** is an alkyl radical having 1-6 carbon atoms or an ω-oxaalkyl-alkyl radical having in total 2-10 carbon atoms,
**R³** is hydrogen, an optionally halogen-substituted cyclic, linear or branched C₁ to C₁₈ alkyl or alkenyl radical or a C₆ to C₁₈ aryl radical,
**a** is an integer from 0 to 2, and
**m** is the number 1,
in which the main chains are constructed from polymers selected from polysiloxane-urea/urethane copolymers, polyurethanes, polyureas, polyethers, polyesters, polyacrylates and polymethacrylates, polycarbonates, polystyrenes, polyamides, polyvinyl esters or polyolefins, polybutadiene, ethylene-olefin copolymers or styrene-butadiene copolymers, and mixtures and combinations of polymers with different main chains,
B) fumed or precipitated silica having a BET surface area of at least 50 m²/g, and
C) a catalyst with not more than 0.05% by weight of amino compounds, and
no other fillers.

2. Polymer blends (P) according to Claim 1, in which the polymers (A) are obtainable by reaction of silanes of the general formula (3)
OCN- (CH₂)ₘ-SiR¹ₐ(OR²)₃₋ₐ (3)
where **R¹, R², R³,** and **m** and **a** possess the definitions specified in Claim 1,
with polyester polyols or polyether polyols.

3. Polymer blends (P) according to Claim 1 and 2, in which **R²** is an alkyl radical having 1-3 carbon atoms.

4. Polymer blends (P) according to Claim 1 to 3, in which the silicas (B) have been hydrophobicized by treatment with organosilanes, organosilazanes or organosiloxanes or by etherification of hydroxyl groups to alkoxy groups.

5. Polymer blends (P) according to Claim 1 to 4, in which the catalysts (C) are selected from tin compounds, Lewis acid compounds of the transition metals titanate, zirconium, hafnium, zinc, boron, aluminium, and bismuth, carboxylic acids, phosphoric acids, partial esters of phosphoric acids, phosphorous acids, partial esters of phosphorous acids, toluenesulfonic acids, and mineral acids.

## Revendications

1. Mélanges polymères (P), qui contiennent
A) des polymères (A) à terminaison alcoxysilane, comportant au moins un groupe terminal de formule générale (1)
-A-(CH₂)ₘ-SiR¹ₐ(OR²)₃₋ₐ (1)
dans laquelle
**A** représente un groupe de liaison à deux liaisons, choisi parmi -O-, -S-, -O-CO-N(R³) -, -N(R³)-CO-O-, -N(R³)-CO-NH-, -NH-CO-N(R³)-, -N(R³)-CO-N(R³)-,
**R¹** représente un radical alkyle, cycloalkyle, alcényle ou aryle ayant de 1 à 10 atomes de carbone, éventuellement substitué par halogène,
**R²** représente un radical alkyle ayant de 1 à 6 atomes de carbone ou un radical ω-oxaalkyle-alkyle ayant au total de 2 à 10 atomes de carbone,
**R³** représente un atome d'hydrogène, un radical alkyle ou alcényle en C₁-C₁₈ cyclique, linéaire ou ramifié, éventuellement substitué par halogène, ou un radical aryle en C₆-C₁₈,
**a** représente un nombre entier allant de 0 à 2 et
**m** représente le nombre 1,
dans lesquels les chaînes principales sont constituées de polymères qui sont choisis parmi des copolymères polysiloxane-urée/ uréthanne, des polyuréthannes, des polyurées, des polyéthers, des polyesters, des polyacrylates et polyméthacrylates, des polycarbonates, des polystyrènes, des polyamides, des poly(esters vinyliques) ou des polyoléfines, des polybutadiènes, des copolymères éthylène/oléfine ou des copolymères styrène/butadiène et des mélanges et associations de polymères ayant différentes chaînes principales,
B) un acide silicique précipité ou produit par pyrogénation, ayant une surface BET d'au moins 50 m²/g et
C) un catalyseur comportant au maximum 0,05 % en poids de composés amino et
ne contiennent pas d'autres charges.

2. Mélanges polymères (P) selon la revendication 1, dans lesquels les polymères (A) peuvent être obtenus par mise en réaction de silanes de formule générale (3)
OCN-(CH₂)ₘ-SiR¹ₐ(OR²)₃₋ₐ (3),
**R¹, R², R³** et **m** et **a** ayant les significations indiquées dans la revendication 1,
avec des polyesterpolyols ou des polyétherpolyols.

3. Mélanges polymères (P) selon les revendications 1 et 2, dans lesquels **R²** représente un radical alkyle ayant de 1 à 3 atomes de carbone.

4. Mélanges polymères (P) selon les revendications 1 à 3, dans lesquels les acides siliciques (B) sont rendus hydrophobes par traitement par des organosilanes, -silazanes ou -siloxanes ou par éthérification de groupes hydroxy en groupes alcoxy.

5. Mélanges polymères (P) selon les revendications 1 à 4, dans lesquels les catalyseurs (C) sont choisis parmi des composés contenant de l'étain, des composés acides de Lewis des métaux de transition titanate, zirconium, hafnium, zinc, bore, aluminium et bismuth, des acides carboxyliques, des acides phosphoriques, des esters partiels d'acides phosphoriques, des acides phosphoreux, des esters partiels d'acides phosphoreux, des acides toluènesulfoniques et des acides minéraux.
